# EUROPEAN PATENT APPLICATION

(11) **EP 1 324 335 A2**
(43) Date of publication of application: **02.07.2003**
(21) Application number: 02256330.8
(22) Date of filing: 12.09.2002
(51) Int. Cl.: G11B 20/12, G11B 20/18, G11B 27/30

(54) **Method and apparatus for recording data on optical recording medium**

(30) Priority: 17.12.2001 KR 2001080014
(71) Applicant: SAMSUNG ELECTRONICS CO., LTD., Suwon-City, Kyungki-do (KR)
(72) Inventor: Hwang, Sung-hee, Gangnam-gu, Seoul (KR); Lee, Yoon-woo, Paldal-gu, Suwon-si, Gyeonggi-do (KR); Han, Sung-hyu, Gangnam-gu, Seoul (KR); Ruy, Sang-hyun, Suwon-si, Gyeonggi-do (KR); Ju, Young-im, Gangna-gu, Seoul (KR)
(74) Representative: Chugg, David John

(57) **Abstract**

Provided is a method of recording data on an optical recording medium having a plurality of addressable unit areas. 62 sync frames, each having a sync code and data, are recorded in each of the addressable unit areas. Thus, user data can be recorded on a recordable optical disc, particularly a recordable compact disc, at a higher density.

## Description

The present invention relates to a method and an apparatus for recording data on a recordable disc, and more particularly, to a method and an apparatus for recording data on a recordable compact disc at a high density.

Recently, as video or audio data having large capacity are frequently transmitted and received over the Internet, the need for a high-density recording medium capable of easily recording/reproducing data thereon/therefrom has arisen.

Recordable optical discs include CD-R/RWs of 650 MB, DVD-RAM/R/RWs of 4.7GB, DVD+RWs of 4.7GB, and the like. Also, researches on and the development of HD-DVDs having recording capacity of more than 20GB have been in progress.

In case of DVDs, whereas DVD-ROMs are gradually widespreading to general users, D-RAM/R/RWs, DVD+RWs, and recording apparatuses capable of recording user data on D-RAM/R/RWs and DVD+RWs are not so widely accepted by general users. Thus, CD-R/RWs are widely used as recordable optical discs. While data can be recorded only one time on CD-Rs, data can be repeatedly rewritten on CD-RWs. However, user data of about 650MB can be recorded on CD-Rs and CD-RWs.

On D-RWs, DVD+RWs, and DVD-RAMs, user data of about 4.7GB can be recorded. However, DVD-RAMs are gradually widespread to general users while recordable DVDs and drives capable of recording user data on DVDs are not yet spread to the general users.

With a view to solve or reduce the above-described problems, it is an aim of embodiments of the present invention to provide a method and an apparatus for recording data on a conventional recordable disc at a high density.

It is another aim of embodiments of the present invention to provide a method and an apparatus for recording data on a recordable compact disc at a higher density.

According to an aspect of the present invention, there is provided a method of recording data on an optical recording medium having a plurality of addressable unit areas. The method includes step (a) of recording 62 sync frames, each having a sync code and data, in each of the addressable unit areas.

Also, there is provided a method of recording data on a compact disc having a plurality of physical sector areas which are designated by addressing information pre-recorded when manufacturing the compact disc. The method includes step (a) of recording two physical sectors in each of the physical sector areas.

It is preferable that in step (a), 62 sync frames, each having a sync code and data of 77 bytes, are recorded.

It is preferable that step (a) includes: (a1) adding an error detecting code to user data and header information; (a2) performing error correction code-encoding; (a3) performing interleaving; (a4) performing channel-modulating; (a5) adding a sync code to a channel bit stream corresponding to data of 77 bytes to generate one sync frame; and (a6) recording 62 sync frames in each of the physical sector areas.

Preferably, in step (a2), an error correction code block to which main data of 148 × 112 bytes, Parity Inner of 6 bytes, and Parity Out of 12 rows are added is generated using Reed-Solomon Product Code.

It is preferable that step (a3) includes (a31) dividing two error correction code blocks of N1 × N2 bytes into blocks of "d" bytes that represent the greatest common divisor along a column, respectively; (a32) dividing the object blocks of d × N1 bytes into d parts along a row and a column, respectively, to obtain partitions of d × d; and (a33) interleaving data in a predetermined partition by alternatively selecting the two error correction code blocks to obtain a recording block having line-code words of 2 × N2.

Preferably, in step (a3), a recording block having 16 recording units is generated by performing interleaving, and the recording unit has the size of 154 × 15.5 bytes and includes Parity Outs of 1.5 rows.

It is preferable that in step (a4), data of 1 byte is modulated to 15.3 channel bits, and step (a4) is performed according to a Dual modulation algorithm.

According to another aspect of the present invention, there is provided an apparatus for recording data on a compact disc having a plurality of physical sector areas which are designated by addressing information pre-recorded when manufacturing the compact disc. The apparatus includes an encoding unit, a modulating unit, a sync unit, and a recording unit. The encoding unit encodes use data and header information. The modulating unit modulates the encoded data to channel bits. The sync unit adds a sync code to the modulated data. The recording unit records 62 sync frames, each having a sync code and data, in an addressable unit area.

It is preferable that the encoding unit includes an error detecting code adder, an error correction code encoder, and an interleaver. The error detecting code adder adds an error detecting code to the user data and the header information. The error correction code encoder error correction code-encodes the user data and the header information to which the error detecting code is added using Reed-Solomon Code to generate an error correction code block. The interleaver interleaves the generated error correction code block.

It is preferable that the error detecting code adder generates a logic sector of 148 × 14 bytes having user data of 2048 bytes, header information, and an error detecting code, and the error correction code encoder generates an error correction code block of 154 × 124 bytes in which Parity Inner of 6 bytes and Parity Out of 12 rows are added to eight logic sectors using Reed-Solomon Product Code.

It is preferable that the interleaver divides first and second error correction code blocks into two parts along the rows of the error correction code blocks and divides two rows along the column of the error detecting code blocks, respectively, to form 56 object blocks each including four partitions and interleaves data so that partitions of the object blocks belonging to the first error correction code block and partitions of the object blocks belonging to the second error correction code block are alternatively selected to generate a recording block.

Preferably, the sync unit generates one physical sector which includes 31 sync frames, each having a channel bit stream corresponding to data of 77 bytes and a sync code of 32 channel bits.

For a better understanding of the invention, and to show how embodiments of the same may be carried into effect, reference will now be made, by way of example, to the accompanying diagrammatic drawings in which:
Figures 1A and 1B are schematic views of a compact disc;
Figure 2 is a block diagram of a recording apparatus according to a preferred embodiment of the present invention;
Figure 3 is a block diagram of a realization of a recording apparatus based on the design shown in Figure 2;
Figure 4 is a view of the configuration of a logic sector;
Figures 5 and 6 are views of different configurations of an ECC block;
Figures 7 through 11 are reference views for explaining interleaving according to embodiments of the present invention;
Figure 12 is a reference view for explaining a process of creating a recording block by performing interleaving in ECC blocks A and B of Figure 6 according to an embodiment of the present invention;
Figure 13 is a view of the configuration of a physical sector according to embodiments of the present invention.
Figure 14 is a view of the structure of data recorded in an addressable unit area according to embodiments of the present invention;
Figure 15 is a flowchart for explaining a method of recording data according to an embodiment of the present invention; and
Figure 16 is a flowchart for explaining a method of recording data according to an embodiment of the present invention.

Hereinafter, preferred embodiments of the present invention will now be described in detail with reference to the attached drawings.

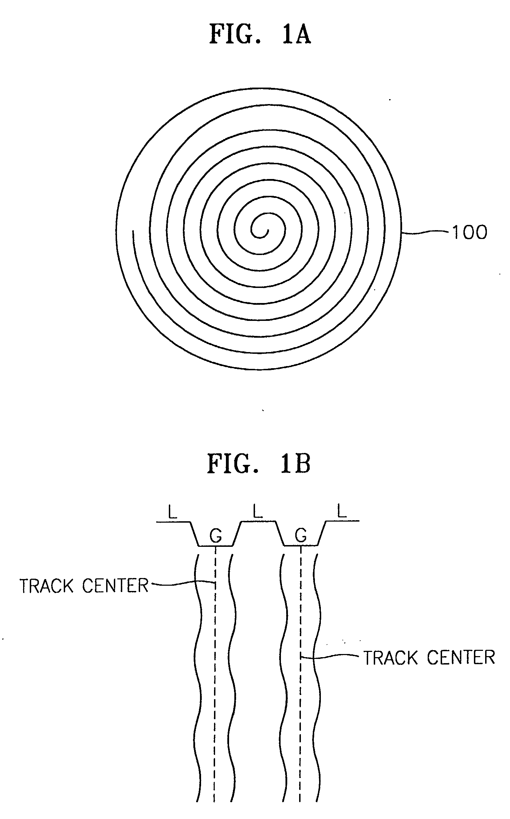

Figures 1A and 1B are schematic views of a compact disc. Referring to Figure 1A, a spiral track is formed in a recordable compact disc 100. The track includes land tracks and groove tracks. Referring to Figure 1B, reference characters G and L represent groove tracks and land tracks, respectively. The groove tracks are wobbled by about ±0.03 µm toward the radius direction of the recordable compact disc 100. Signals detected from the wobbled tracks through a push-pull channel are called "wobble signals". A wobble signal includes absolute time information on a disc, i.e., Absolute Time In Pregroove (ATIP) information, a frequency of which is modulated. The ATIP information is a kind of address information. Thus, a physical sector area is determined depending on the ATIP information. According to an existing recording format, user data of 2048 bytes (a physical sector) is recorded in "one physical sector area", i.e, "a ATIP sector" while user data of 4096 bytes (two physical sectors) is recorded according to an embodiment of the present invention.

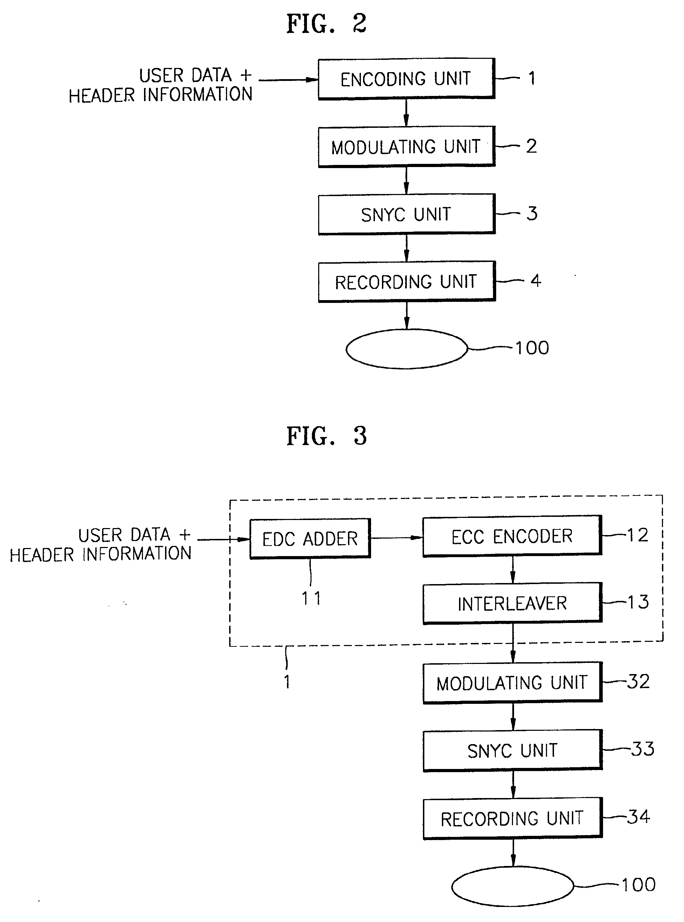

Figure 2 is a block diagram of a recording apparatus according to a preferred embodiment of the present invention. Referring to Figure 2, the recording apparatus records data on the compact disc 100 shown in Figures 1A and 1B and includes an encoding unit 1, a modulating unit 2, a sync unit 3, and a recording unit 4.

The encoding unit 1 encodes user data and header information. The modulating unit 2 modulates the encoded data to a channel bit stream. The sync unit 3 adds a sync code of a predetermined channel bit to a predetermined position of the modulated channel bit stream. The recording unit 4 records the channel bit stream including the sync code on the compact disc 100. Two physical sectors, i.e, 62 sync frames, are recorded in one physical sector area. One sync frame is composed of sync codes of a predetermined channel bit and data of 77 bytes.

Figure 3 is a block diagram of a realization of a recording apparatus based on the design shown in Figure 2. The recording apparatus includes an error detecting code (EDC) adder 11, an error correction code (ECC) encoder 12, an interleaver 13, a modulating unit 32, a sync unit 33, and a recording unit 34.

The EDC adder 11 adds an EDC to user data and header information to generate a logic sector. The ECC encoder 12 generates an ECC block in which parity, i.e., Parity Inner (PI) and Parity Out (PO) are added to a plurality of logic sectors by performing ECC-encoding using Reed-Solomon Product Code. Reed-Solomon Product Code is known as correcting multi-errors. However, used codes may vary if necessary. The size of the ECC block and the number of bytes which are assigned to PI and PO may also vary.

The interleaver 13 interleaves two ECC blocks to generate a recording block. The interleaver 13 divides first and second ECC blocks into two parts along the rows of the ECC blocks and divides two rows along the column of the EDD blocks, respectively, to form 56 object blocks each including four partitions and interleaves data so that partitions of the object blocks belonging to the first ECC block and partitions of the object blocks belonging to the second ECC block are alternatively selected to generate a recording block. More detailed descriptions will be described later.

The modulating unit 32 modulates data of 1 byte to 15.3 channel bits according to a Dual modulation algorithm. The sync unit 33 adds a sync code of 32 channel bits according to the Dual modulation algorithm to a channel bit stream. The Dual modulation algorithm is disclosed in Korean Patent Application No. 99-42032 entitled "Method of Arranging RLL Codes Having Improved DC Suppression Capabilities, Demodulation and Modulation algorithm, and Demodulating Apparatus", filed on September 30, 1999 by the applicant of the present invention and published on November 25, 2000. In brief, in the Dual modulation algorithm, first, a pair of code groups is arranged such that DC suppression of a code sequence can be controlled; second, signs of a parameter CSV, representing a DC value in a code word of a code corresponding to the same source code in the pair of code groups, and codes (1, 8, 8, 12), arranged so that characteristics of a parameter INV for estimating a Digital Sum Value (DSV) transition direction of a next code word are opposite to one another, are used.

The recording unit 34 records two physical sectors in one ATIP sector. One physical sector includes 31 sync frames. As will be described later, one sync frame is composed of a sync code of 32 channel bits and data of 77 bytes. The detailed structure of one physical sector will be described later.

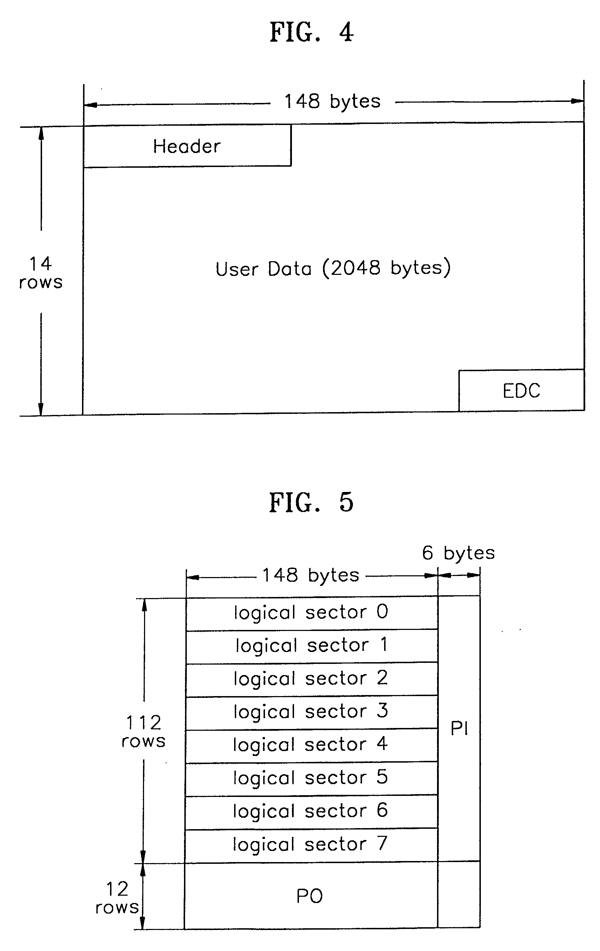

Figure 4 shows the configuration of one logic sector. Referring to 4, one logic sector generated by the ECC adder 11 has the size of 148 × 14 bytes according to this embodiment and is composed of user data of 2048 bytes, header information of 20 bytes, and an EDC of 4 bytes.

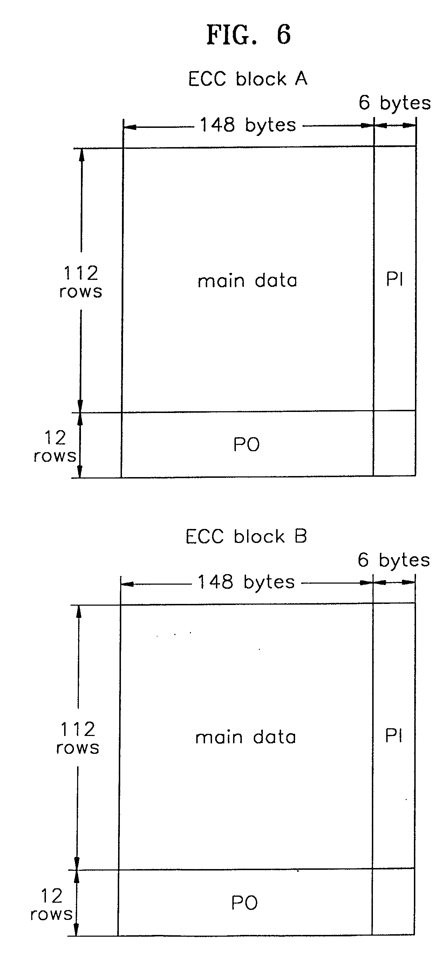

Figures 5 and 6 show the configurations of an ECC block. Referring to Figure 5, the ECC encoder 12 generates the ECC block of 154 × 124 bytes by adding PI and PO to eight logic sectors which was described with reference to Figure 4. A code word of data of 148 bytes and PI of 6 bytes is arranged along a row and code words of 112 rows are arranged along a column with PO of 12 rows.

Referring to Figure 6, the interleaving according to the present invention is performed in ECC blocks A and B. Data except PI and PO is called "main data".

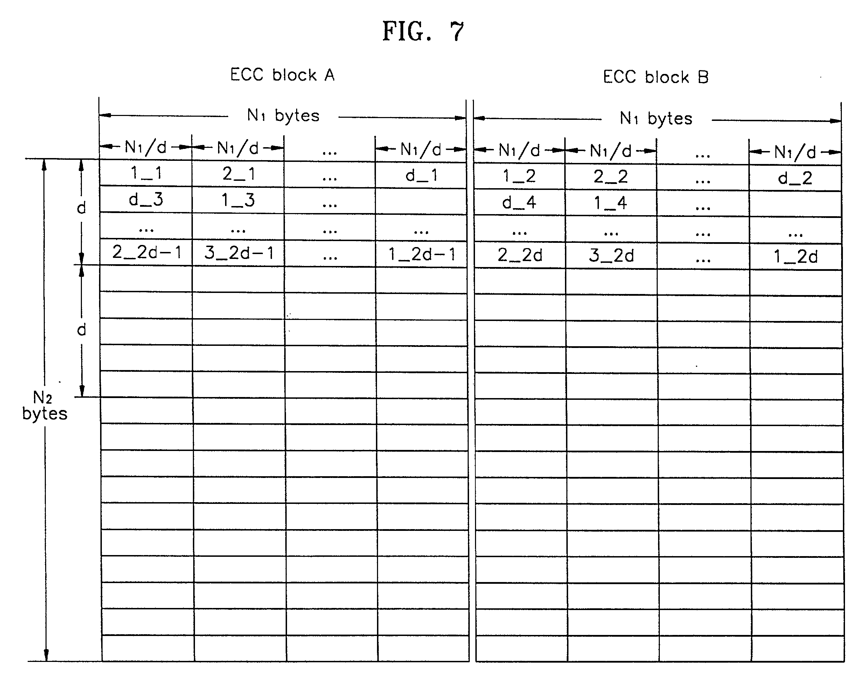

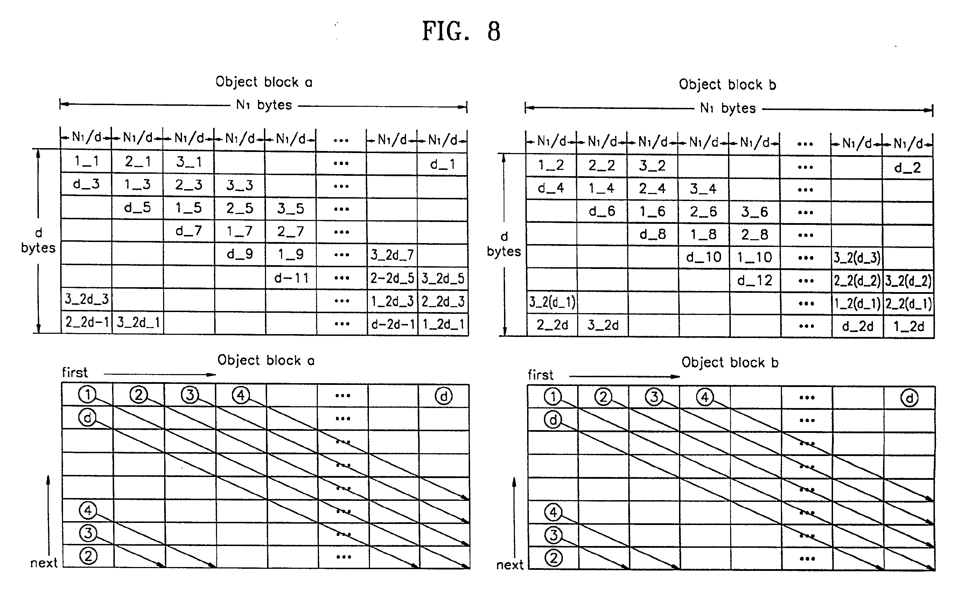

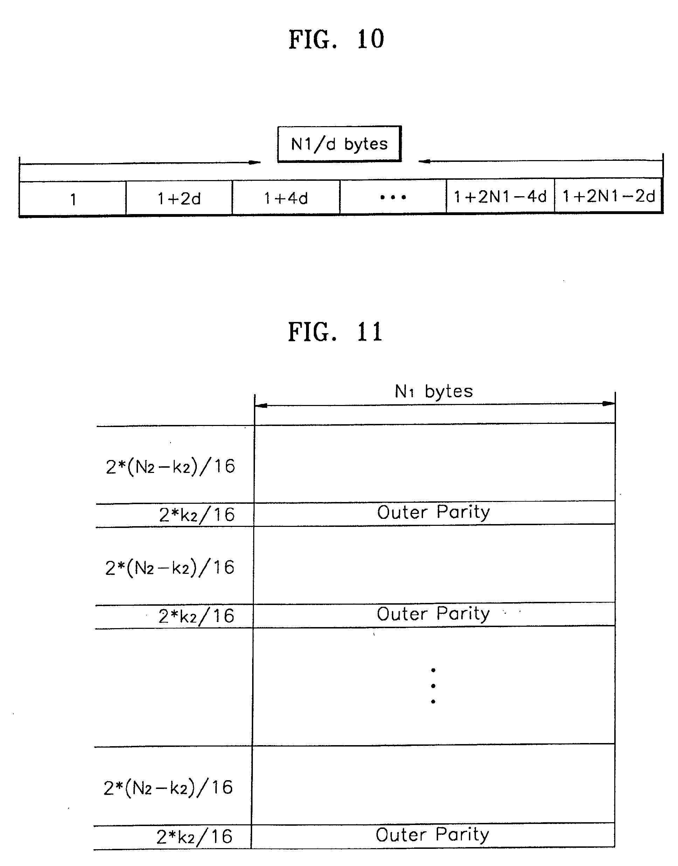

Figures 7 and 11 are reference views for explaining interleaving according to the present invention. Referring to Figures 7 and 8, assuming that ECC blocks A and B are composed data of N₁ bytes along the row and data of N₂ bytes along the column, respectively, the interleaving is performed as follows.

First, ECC blocks A and B are divided into "d" blocks along a column. Here, "d" is a common divisor of N₁ and N₂. The divided several blocks are called "object blocks". The interleaving according to this embodiment is performed in the respective object blocks "a" and "b" of ECC blocks A and B.

The interleaving algorithm will now be described in more detail. First, object blocks "a" and "b" are divided along a column based on each line, respectively. Thus, object blocks "a" and "b" are divided into partitions of d x d, respectively. As a result, partitions of 2 × d × d are created from object blocks "a" and "b". These partitions are 1_1, 1_2, .., 1_2, × d, 2_1, 2_2, .., 2_2 × d, .., d_1, d_2, .., d_2 × d, each having data of N₁/d bytes.

Next, data is extracted from the partitions in numerical order. In other words, first data is extracted from partition 1_1, second data is extracted from partition 1_2, .., 2 × d^{th} data is extracted from partition 1_2 × d, 2 × d + 1^{th} data is extracted from partition 1_1, 2 × d + 2^{th} data is extracted from partition 1_2, .., and 2 × d + 2 × d^{th} data is extracted from partition 1_2 × d. In such order, data is extracted from all of 1_1, 1_2, .., 1_2 × d, and then data is alternatively extracted from 2_1, 2_2, .., 2_2 × d.

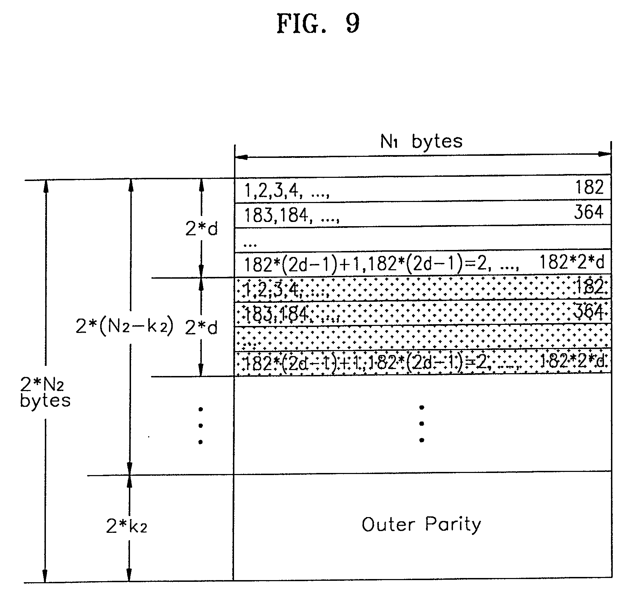

This process is repeated on each "d" line. A block created through this process is shown in Figure 9.

Referring to Figure 9, it can be seen that the created block is composed of data of 2 × (N₂ - k2) and an outer parity of 2 × k2. Figures recorded along the rows of the block represent consecutive numbers that are allotted to byte data of each partition. In other words, as described with reference to Figures 7 and 8, when the interleaving is performed, the byte data is arranged in the order shown in Figure 9.

For example, a method of allocating consecutive numbers to object blocks "a" and "b" will be described. In other words, since each partition of object blocks "a" and "b" has data of N₁/d bytes, the following consecutive numbers are given to the partitions of object blocks "a" and "b".
Partition 1_1: When the remainder N₁/d of 1, ..., 2 × N1 divided by 2 × d is 1.
Partition 1_2: When the remainder N₁/d of 1, ..., 2 × N1 divided by 2 × d is 2.
...
Partition 1_2 × d: When the remainder N₁/d of 1, ..., 2 x N1 divided by 2 × d is 0.
Partition 2_1: When the remainder N₁/d of 2 × N₁ + 1, ..., 2 × N₁ + 2 × N₁ divided by 2 × d is 1.
Partition 2_2: When the remainder N₁/d of 2 × N₁ + 1, ..., 2 × N₁ + 2 × N₁ divided by 2 × d is 2.
Partition 2_2 × d: When the remainder N₁/d of 2 × N₁ + 1, ..., 2 × N₁ + 2 × N₁ divided by 2 × d is 0.
...
Partition d_1: When the remainder N₁/d of (d-1) × 2 × N₁ + 1, ..., d × 2 × N₁ divided by 2 × d is 1.
Partition d_2: When the remainder N₁/d of (d-1) × 2 × N₁ + 1, ..., d × 2 × N₁ divided by 2 × d is 2
...
Partition d_2 × d: When the remainder N₁/d of (d-1) × 2 × N₁ + 1, ..., d × 2 × N₁ divided by 2 × d is 0.

This is generalized as follows.
Partition m_n: When the remainder N₁/d of 2 × N₁(m-1) +1, ..., 2 × m × N₁ divided by 2 × d is n.

Referring to Figure 10, for example, numbers 1, 1+2d, 1+4d, ..., 1+2N1-4d, 1+2N1-2d are sequentially given to data of N1/d bytes of partition 1_1. In other words, partition 1_1 has data of N1/d bytes, first byte of which is given 1, second byte of which is given 1+2d, third byte of which is given 1+4d, ..., (N1/d)-1^{th} byte of which is given 1+2N1-4d, and N1/d^{th} byte of which is given 1+2N1-2d.

Figure 11 schematically shows a recording block rearranged based on the block of Figure 9. Referring to Figure 11, the recording block is created by inserting PO of 2 × k2 in the block of Figure 9 at every 2 × k2/16 lines.

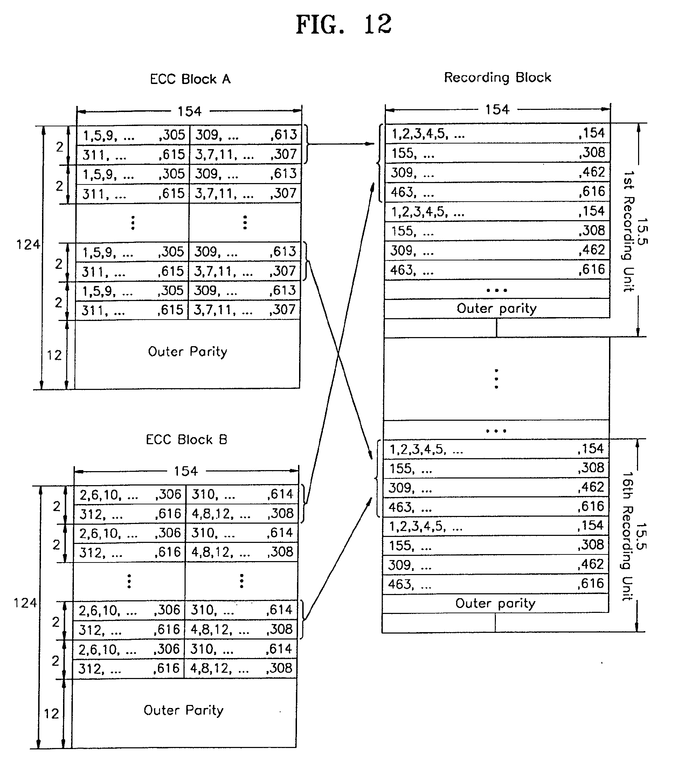

Figure 12 is a view for explaining a process of creating a recording block by performing interleaving in ECC blocks A and B. Referring to Figure 12, when ECC blocks A and B are divided at every two lines, respectively, object blocks "a" and "b" have eight partitions (1), (2), (3), (4), (5), (6), (7), and (8), respectively. Object block "a" belongs to ECC block A and object block "b" belongs to ECC block "b". Partition (1) has data 1, 5, 9, .., 305, partition (2) has data of 309, .., 613, partition (3) has data of 2, 6, 10, .., 306. partition (4) has data of 310, .., 614, partition (5) has data of 311, .., 615, partition (6) has data of 3, 7, 11, .., 307, partition (7) has data of 312, .., 616, and partition (8) has data of 4, 8, 12, .., 308.

To perform the interleaving, first data is extracted from partition (1), second data is extracted from partition (3), third data is extracted from partition (6), and fourth data is extracted from partition (8). Fifth data is extracted from partition (1), sixth data is extracted from partition (3), seventh data is extracted from partition (6), and eighth data is extracted from partition (8). After extracting all data from partitions (1), (3), (6), and (8), data is alternatively extracted from partitions (2), (4), (5), and (7). This process is repeated at every two lines. Meanwhile, since POs of ECC blocks A and B are 24 lines, respectively, POs of 1.5 lines are equally distributed to each recording unit. As a result, the recording block is created.

The recording block is composed of 16 recording units. Each of the recording units has a size of 154 × 15.5 bytes.

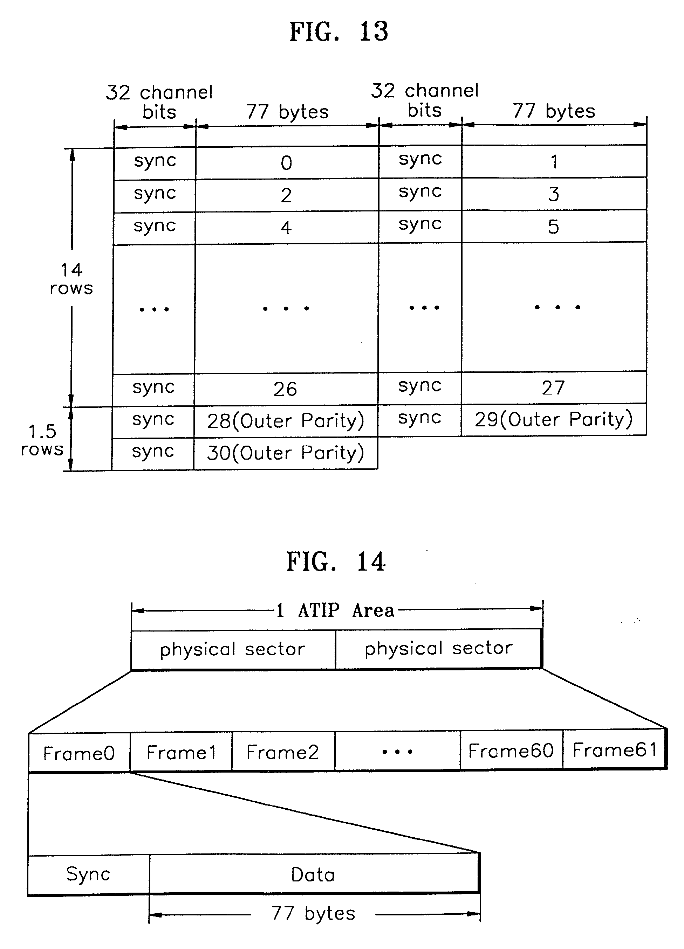

Figure 13 shows the configuration of one physical sector. Referring to Figure 13, one physical sector is composed of data corresponding to one recording unit of Figure 12 including 77 bytes and sync codes. In this embodiment, each sync code is composed of 32 channel bits according to a Dual coding method. When a sync code of 32 channel bits and data of 77 bytes form one sync frame, one sector data is composed of 31 sync frames. Here, the number of channel bits being assigned to the sync codes and the sync codes may vary.

Figure 14 shows the configuration of data that is recorded in an addressable unit area. Referring to Figure 14, two physical sectors are recorded in on physical sector that is one addressable unit area of the recordable compact disc. Each of the physical sectors is composed of 31 sync frames. Each sync frame is composed of a sync code of 32 channel bits and user data of 77 bytes.

A method of recording data will now be described based on the above-described structure.

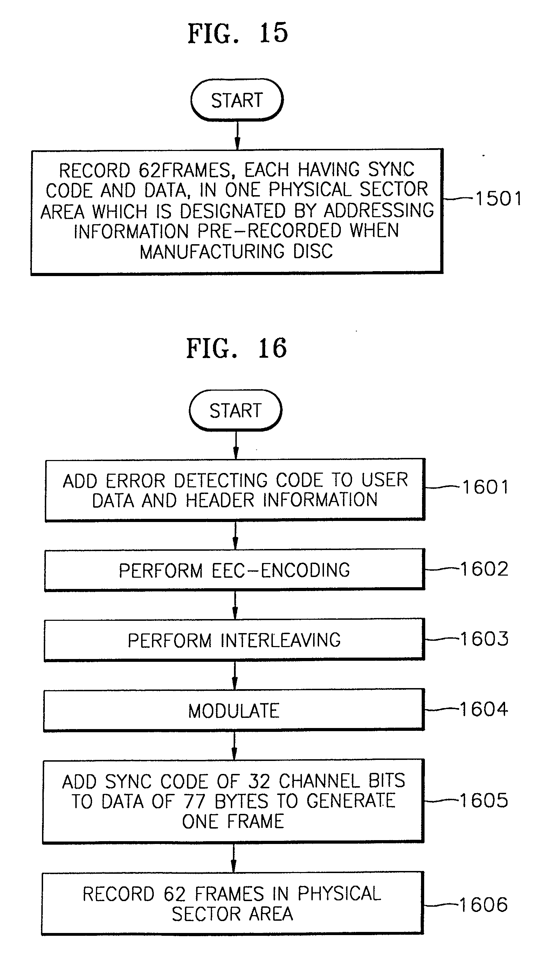

Figure 15 is a flowchart for explaining a method of recording data according to the present invention. Referring to Figure 15, in step 1501, the recording apparatus records two physical sectors, i.e., 62 sync frames, each having a sync code of 32 channel bits and data of 77 bytes, in one physical sector area which is designated by addressing information pre-recorded when manufacturing the recordable compact disc.

Figure 16 is a flowchart for explaining a recording data according to the embodiment. Referring to Figure 16, in step 1601, the EDC adder 11 of the recording apparatus adds an EDC to user data of 2048 bytes and header information to generate one logic sector. In step 1602, the ECC encoder 12 generates an ECC block of 154 × 124 bytes to which PI of 6 bytes and PO of 12 rows are added by performing ECC-encoding using Reed-Solomon Product Code. In step 1603, the interleaver 13 performs interleaving in two ECC blocks to generate a recording block having 16 recording units. In step 1604, the modulating unit 32 modulates data of 1 byte to 15.3 channel bits according to the Dual modulation algorithm. In step 1605, the sync unit 33 adds a sync code of 32 channel bits to a channel bit stream according to the Dual modulation algorithm. In step 1606, the recording unit 34 records two physical sectors, i.e., 62 sync frames, in one physical sector area according to the present invention.

As described above, user data can be recorded on a recordable optical disc, particularly a recordable compact disc, at a higher density. In other words, 98 Eight-to-Fourteen Modulation (EFM) frames, i.e., data of 57624 channel bits (about 3390 bytes), is recorded in one ATIP sector of a conventional recordable compact disc to record user data of 2048 bytes. However, two physical sectors are recorded in one ATIP sector and data of 2449 bytes (a sync code of 32 channel bits (2 bytes) + header information of 20 bytes + user data of 2048 bytes + an EDC of 4 bytes) is recorded in each of the physical sectors. Thus, the recordable compact disc according to this embodiment of the present invention has recording density 1.384 (3390/2449) times higher than the conventional recordable compact disc.

Further, in the prior art, data of 8 bytes is modulated to 17 channel bits according to the Dual modulation algorithm while in the present invention, data of 8 bytes is modulated to 15.3 channel bits. Thus, recording density can increase by about 1.1 times.

Also, when the minimum mark length (MML) is reduced from 0.833 µm to 0.627 µm, recording density can increase by 1.33 times. Thus, if the Dual modulation algorithm is used with the reduction in the MML, 2.04 times higher recording density can be obtained. The reduction in the MML is possible within the limit of guaranteeing reproduction quality. However, according to ECC blocks and the interleaving of the present invention, since the correction rate of burst errors increases, reproduction quality can be guaranteed to some extent although the MML is reduced to 0.627 µm.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording data on a compact disc having a plurality of physical sector areas which are designated by addressing information pre-recorded when manufacturing the compact disc, the method comprising:
(a) recording two physical sectors in each of the physical sector areas.

2. A method of recording data on an optical recording medium having a plurality of addressable unit areas, the method comprising:
(a) recording 62 sync frames, each having a sync code and data, in each of the addressable unit areas.

3. The method of claim 1, wherein in step (a), 62 sync frames, each having a sync code and data of 77 bytes, are recorded.

4. The method of claim 1 or 3, wherein step (a) comprises:
(a1) adding an error detecting code to user data and header information;
(a2) performing error correction code-encoding;
(a3) performing interleaving;
(a4) performing channel-modulating;
(a5) adding a sync code to a channel bit stream corresponding to data of 77 bytes to generate one sync frame; and
(a6) recording 62 sync frames in each of the physical sector areas.

5. The method of claim 4, wherein in step (a2), an error correction code block to which main data of 148 × 112 bytes, Parity Inner of 6 bytes, and Parity Out of 12 rows are added is generated using Reed-Solomon Product Code.

6. The method of claim 4 or 5, wherein step (a3) comprises:
(a31) dividing two error correction code blocks of N1 × N2 bytes into blocks of "d" bytes that represent the greatest common divisor along a column, respectively;
(a32) dividing the object blocks of d × N1 bytes into d parts along a row and a column, respectively, to obtain partitions of d × d; and
(a33) interleaving data in a predetermined partition by alternatively selecting the two error correction code blocks to obtain a recording block having line-code words of 2 × N2.

7. The method of claim 4, 5 or 6, wherein in step (a3), a recording block having 16 recording units is generated by performing interleaving.

8. The method of claim 7, wherein the recording unit has the size of 154 × 15.5 bytes and includes Parity Outs of 1.5 rows.

9. The method of claim 4, 5, 6, 7 or 8, wherein in step (a4), data of 1 byte is modulated to 15.3 channel bits.

10. The method of claim 9, wherein step (a4) is performed according to a Dual modulation algorithm.

11. An apparatus for recording data on a compact disc having a plurality of physical sector areas which are designated by addressing information pre-recorded when manufacturing the compact disc, the apparatus comprising:
an encoding unit (1) which encodes use data and header information;
a modulating unit (2) which modulates the encoded data to channel bits;
a sync unit (3) which adds a sync code to the modulated data; and
a recording unit (4) which records 62 sync frames, each having a sync code and data, in an addressable unit area.

12. The apparatus of claim 11, wherein the encoding unit (1) comprises:
an error detecting code adder (11) which adds an error detecting code to the user data and the header information;
an error correction code encoder (12) which error correction code-encodes the user data and the header information to which the error detecting code is added using Reed-Solomon Code to generate an error correction code block; and
an interleaver (13) which interleaves the generated error correction code block.

13. The apparatus of claim 12, wherein the error detecting code adder (11) generates a logic sector of 148 × 14 bytes having user data of 2048 bytes, header information, and an error detecting code, and the error correction code encoder (12) generates an error correction code block of 154 × 124 bytes in which Parity Inner of 6 bytes and Parity Out of 12 rows are added to eight logic sectors using Reed-Solomon Product Code.

14. The apparatus of claim 13, wherein the interleaver (13) divides first and second error correction code blocks into two parts along the rows of the error correction code blocks and divides two rows along the column of the error detecting code blocks, respectively, to form 56 object blocks each including four partitions and interleaves data so that partitions of the object blocks belonging to the first error correction code block and partitions of the object blocks belonging to the second error correction code block are alternatively selected to generate a recording block.

15. The apparatus of claim 14, wherein the interleaver (13) generates a recording block in which data of 1 through 616 is sequentially arranged and which has 16 recording units of 154 × 15.5 bytes to which Parity Outs of 1.5 rows is added when partition (1) has data 1, 5, 9, .., 305, partition (2) has data of 309, .., 613, partition (3) has data of 2, 6, 10, .., 306, partition (4) has data of 310, .., 614, partition (5) has data of 311, .., 615, partition (6) has data of 3, 7, 11, .., 307, partition (7) has data of 312, .., 616, and partition (8) has data of 4, 8, 12, .., 308, which belong to an object block of a first error correction code block.

16. The apparatus of claim 15, wherein the sync unit (13) generates one physical sector which includes 31 sync frames, each having a channel bit stream corresponding to data of 77 bytes and a sync code of 32 channel bits.
